# EUROPEAN PATENT APPLICATION

(11) **EP 4 741 284 A1**
(43) Date of publication of application: **13.05.2026**
(21) Application number: 25208977.6
(22) Date of filing: 15.10.2025
(51) Int. Cl.: B64C 9/22

(54) **WING FOR AN AIRCRAFT**

(30) Priority: 07.11.2024 DE 102024132505
(71) Applicant: Airbus Operations GmbH, 21129 Hamburg (DE)
(72) Inventor: Krey, Dennis, 21129 Hamburg (DE); Schlipf, Bernhard, 21129 Hamburg (DE)
(74) Representative: Airbus Germany

(57) **Abstract**

Disclosed is a wing (3) for an aircraft (1), comprising a main wing (5) and a leading edge high lift assembly (6) comprising a slat (7), and a connection assembly (9) movably connecting the slat (7) to the main wing (5), such that the slat (7) is movable between a retracted position (11), a first extended position (13), and a second extended position (15), wherein the connection assembly (9) comprises an elongate slat track (17) that extends along a track longitudinal axis (19) between a first end (21) and a second end (23) and has an intermediate portion (25) between the first and second ends (21, 23), wherein the first end (21) and/or the intermediate portion (25) of the slat track (17) is mounted to the slat (7), wherein the slat track (17) is mounted to the main wing (5) by a roller bearing (27) such that the slat track (17) is movable along the track longitudinal axis (19), wherein the roller bearing (27) comprises a plurality of bearing units (34a-c), each of the bearing units (34a-c) being mounted to the main wing (5) and having a bearing surface (22) for engaging an engagement surface (35) provided on the slat track (17), wherein the plurality of bearing units (34a-c) comprises at least a first end roller unit (34a) and an intermediate roller unit (34b), wherein the plurality of bearing units (34a-c) are positioned such that, relative to the track longitudinal axis (19), the intermediate roller unit (34b) is positioned between the first end roller unit (34a) and the second end (23) of the slat track (17). The object to provide a wing having a beneficial ratio of aerodynamic performance and noise generated by extension of the slat, is achieved in that the slat track (17) and the roller bearing (27) are configured such that in the retracted position (11) and in the first extended position (13), the slat (7) rests against the main wing (5), whereas in the second extended position (15), a gap (37) is formed between the trailing edge of the slat (7) and the leading edge of the main wing (5).

## Description

The present invention relates to a wing for an aircraft. Further aspects of the invention relate to a leading edge high lift assembly for such a wing, as well as to an aircraft comprising such a wing and/or comprising such a leading edge high lift assembly.

The described wing for an aircraft comprises a main wing and a leading edge high lift assembly, the leading edge high lift assembly comprising a slat and a connection assembly movably connecting the slat to the main wing such that the slat is movable relative to the main wing between a retracted position and several extended positions, in particular a first extended position and a second extended position. The first extended position preferably relates to a partly extended position that is taken during take-off of the respective aircraft, while the second extended position preferably relates to a fully extended position that is taken during approach and landing of the respective aircraft.

The connection assembly comprises an elongate slat track that extends along a track longitudinal axis between a first end and a second end and has an intermediate portion between the first and second ends. The slat track may have a curved or straight form along the track longitudinal axis. At least one, or both, of the first end and the intermediate portion of the slat track is/are mounted to the slat. The first end preferably corresponds to a front end of the connection assembly, e.g. the end positioned towards the intended direction of forward motion of the wing during flight of an aircraft.

The first end of the slat track may be preferably mounted to the slat by any appropriate means, e.g. by an arrangement of spherical bearings, preferably in a fixed manner with respect to a chord plane. The slat track may be preferably mounted to the main wing by a roller bearing, as will be described, such that the slat track and the slat are moveable relative to the main wing. The slat track may take the form of, for example, a C-shape, such that its surface lies opposite the circumferential surface of the roller bearing, wherein the distance between an upper surface and a lower surface of the slat track is larger than a diameter of a roller bearing, such that the roller bearing may engage only one of the upper surface or the lower surface of the slat track at any one time. I.e. the distance between the upper and lower surfaces of the slat track is selected such that a clearance is provided between the roller bearing and either the upper surface or the lower surface of the slat track, such that the roller bearing cannot engage with the upper and lower surfaces of the slat track at the same time, thereby becoming wedged therein.

The slat track is mounted to the main wing by a roller bearing such that the track is movable along the track longitudinal axis, in particular along a predefined path, such as between a stowed position when the slat is in the retracted position, a first deployed position when the slat is in the first extended position, and a second deployed position when the slat is in the second extended position. The absorbing of the loads (e.g. substantially all the loads or the principal loads or main loads, which may be the majority of the loads) between the main wing and the slat track may be done by the roller bearing.

The roller bearing comprises a plurality of bearing units that are mounted to the main wing and have a bearing surface that engages an engagement surface provided on the slat track. The plurality of bearing units comprises at least a first end roller unit and an intermediate roller unit, wherein the plurality of bearing units is positioned such that, relative to the track longitudinal axis, the intermediate roller unit is positioned between the first end roller unit and the second end of the slat track, in particular when the slat is in the retracted position. The first end roller unit and/or the intermediate roller unit may be mounted to the main wing in any appropriate way, for example may be fixed or fastened to the main wing, for example may be bolted to the main wing.

Similar wings are known in the art. Some known wings employ sealed slats the trailing edge of which is in contact with the leading edge of the main wing at all positions of the slat, so that there is never a gap between the trailing edge of the slat and the leading edge of the main wing. Avoiding a gap reduced aerodynamic drag and noise. Other wings have slats the trailing edge of which is spaced from the leading edge of the main wing by a gap at all extended positions of the slat. Such a gap guides fresh air flow from underneath the wing to the upper side of the wing, thereby inhibiting flow separation and thus increasing lift.

Therefore, the object of the present invention is to provide a wing having a beneficial ratio of aerodynamic performance and noise generated by extension of the slat.

The object is achieved in that the slat track and the roller bearing are configured such that in the retracted position and in the first extended position, the slat rests against the main wing, in particular a trailing edge of the slat rests against a leading edge of the main wing, so that fluid cannot pass between the slat and the main wing, whereas in the second extended position, a gap is formed between the trailing edge of the slat and the leading edge of the main wing for fluid to pass through. In such a way, the benefits of a sealed slat and the benefits of a slat configuration with gap are combined. In particular, for take-off when the aircraft accelerates, little drag is desired as well as little noise, so a closed gap in the first extended position is beneficial. For approach and landing, in turn, when the aircraft requires high lift in order to achieve minimum speed, a gap is beneficial in the fully extended position of the slat. In such a way, an ideal ratio of aerodynamic performance and noise generated by extension of the slat is obtained.

According to a preferred embodiment, the plurality of bearing units further comprises a second end bearing unit, wherein the plurality of bearing units are positioned such that, relative to the track longitudinal axis, the intermediate roller unit is positioned between the first end roller unit and the second end bearing unit. The second end bearing unit may be mounted to the main wing in any appropriate way, for example may be fixed or fastened to the main wing, for example may be bolted to the main wing. By the second end bearing unit an additional bearing unit is provided for receiving loads in particular in the retracted position of the slat.

In particular, it is preferred that the slat track and the roller bearing are configured such that in the retracted position load (in particular the main loads) is transferred (e.g. exclusively transferred) between the slat track and the main wing (preferably between the slat track and the roller bearing) via the first end roller unit (e.g. the principal loads are transferred, e.g. exclusively transferred, between the slat track and the main wing via the first end roller unit) and the second end bearing unit, whereas in the first and second extended positions load (in particular the main loads) is transferred between the slat track and the main wing (preferably between the slat track and the roller bearing) via the first end roller unit and the intermediate roller unit. This might be achieved by the slat track and the roller bearing being configured such that in the retracted position (load bearing) contact is present (only) between the slat track and the first end roller unit as well as between the slat track and the second end bearing unit, whereas in the extended position (load bearing) contact is present (only) between the slat track and the first end roller unit as well as between the slat track and the intermediate roller unit.

Having both an intermediate roller unit and a second end bearing unit in addition to the first end roller unit permits the slat track to be fully supported (by the first end roller unit and the intermediate roller unit) without the need for an additional rail. At the same time, the length of the track can be reduced (due to the shorter distance between the first end roller unit and the intermediate roller unit) while loads can be reduced in the retracted position (due to the longer distance between the first end roller unit and the second end bearing unit), in particular during cruise flight.

According to a preferred embodiment, when the slat is in the retracted position, the intermediate roller unit may be configured to disengage with the engagement surface such that a clearance gap exists between the intermediate roller unit and the engagement surface, and the first end roller unit and the second end bearing unit are configured to engage the engagement surface. When the slat is moved to the first or second extended position, the second end bearing unit may be configured to disengage with the engagement surface and the intermediate roller unit and the first end roller unit is configured to engage with the engagement surface. Allowing the first end roller unit and the second end bearing unit to engage the engagement surface when the slat is in the retracted position may reduce the contact forces by increasing the length of the lever arm between the bearings.

The slat track (e.g. the engagement surface) may be configured to be simultaneously engaged by the first end roller unit and either the intermediate roller unit or the second end bearing unit. As such the slat track may only simultaneously be engaged by two (e.g. exactly two) roller and/or bearing units (e.g. on one side thereof). Where the connection assembly comprises a second set of engagement surfaces (e.g. a mirrored set of engagement surfaces) as will be described further in more detail in the following paragraphs, the slat track may be simultaneously engaged by four (e.g. exactly four) roller and/or bearing units, which may correspond to two roller and/or bearing units per set of engagement surfaces. Limiting the number of roller and/or bearing units in engagement with the slat track may reduce the risk of the slat track being overconstrained.

According to a preferred embodiment, the slat track further comprises a recessed portion which aligns with the intermediate roller unit in the retracted position such that the contact force between the intermediate roller and the engagement surface of the slat track is eliminated or reduced, thereby avoiding the roller bearing overconstrained, thereby resulting in additional forces acting between the roller bearing and the slat track. Further, the lack of an additional rail, plus the configuration of the first and second roller/bearing units may permit a more compact arrangement, thus providing the possibility of easier incorporation of a drive mechanism in the connection assembly, such as a rack-and-pinion or a drive strut combined with a rotary drive. In this case, all or the majority of the load (e.g. the principal loads or main loads) between the wing and the slat track may be absorbed by the first end roller unit and the second end bearing unit.

In particular, it is preferred that the recessed portion defines a discontinuity in the engagement surface dividing the engagement surface into a first engagement surface extending in a first direction parallel to the track longitudinal axis, and a second engagement surface extending in a second direction parallel to the track longitudinal axis, wherein the first end roller unit is configured to engage the first engagement surface, and the intermediate roller unit and second end bearing are configured to engage the second engagement surface. In providing a divided set of engagement surfaces, the forces acting on the slat track may be more evenly distributed therealong.

It is further preferred that the recessed portion comprises a graduated transition to the engagement surface in the form of a ramp. As such, the contact forces may be reduced gradually as a roller and/or bearing unit progresses along the ramp, and may be completely removed e.g. where the roller and/or bearing unit disengages from the engagement surface.

The recessed portion may be defined by a reduction in thickness of the slat track, e.g. a part thereof. The slat track may comprise a first and second flange connected by a web, so as to form a C-shape. The recessed portion may be defined by a reduction in thickness in one or both of the first and second flanges. Where both flanges comprise a reduction in thickness, the thickness reductions may be longitudinally aligned on the track longitudinal axis.

According to a preferred embodiment, the second end bearing unit may be or comprise a roller unit. Additionally or alternatively, the second end bearing unit may comprise a contact pad arrangement and may comprise at least one contact pad surface comprising a crowned surface, thus increasing the contact area therebetween. Additionally or alternatively, the second end bearing unit may comprise a conical or frustum-conically shaped bearing which, when engaged with the engagement surface, may comprise a longitudinal axis that is parallel with the track longitudinal axis. The second bearing unit may comprise a protrusion mounted to the main wing, and the slat track may comprise a recess having a profile configured to receive and mate with the second bearing unit. The second end bearing unit may therefore be shaped so as to provide a guiding effect for engagement between the slat track and the second end bearing unit. This means the second end bearing unit can but does not have to comprise a roller unit, as it mainly serves to receive transverse forces in the retracted position of the slat, i.e. preferably in the end position, but not so much to guide the slat track along its travel path to the extended positions.

According to a preferred embodiment, the slat track comprises a first and second internally oriented engagement surface and/or a first and second externally oriented engagement surface. The first internally oriented engagement surface may face the second internally oriented engagement surface, and the first externally oriented engagement surface may face away from the second externally oriented engagement surface. Each of the first end roller unit, the intermediate roller unit and the second end bearing unit may be configured to engage at least one of the first and second internally oriented engagement surfaces and the first and second externally oriented engagement surfaces. In such a way, various arrangements of efficient roller bearings are possible.

In particular, it is preferred that the slat track has a cross-section across the track longitudinal axis, such as a C-, double C-, I-, Π-, T- or double T-shaped cross section, including an upper flange portion, a lower flange portion, and a web portion connecting the upper and lower flange portions, so that a recess is formed between the upper flange portion, the lower flange portion, and a web portion. Preferably, the first end roller unit, the intermediate roller unit, and/or the second end bearing unit are arranged inside this recess and engage the first and second internally oriented engagement surface at the inner surfaces of the upper and lower flanges. In such a way, a very compact and efficient roller bearing is provided.

Alternatively, it is preferred that the plurality of bearing units may comprise a pair of first end roller units, one of the first end roller units may be configured to engage the first externally oriented engagement surface, and the other of the first end roller units may be configured to engage the second externally oriented engagement surface, and the intermediate roller unit and second end bearing unit may be configured to engage at least one of the first and second internally oriented engagement surfaces. In such a way, an alternative efficient roller bearing is provided.

Alternatively, it is preferred that the plurality of bearing units may comprise a pair of first end roller units, a pair of intermediate roller units, and a pair of second end bearing units, one of the first end roller units, intermediate roller units and second end bearing units configurable to engage the first externally oriented engagement surface and the other of the first end roller units, intermediate roller units and second end bearing units configurable to engage the second externally oriented engagement surface. Having a pair or several pairs of roller and/or bearing units may allow a much greater load to be taken by the roller/bearing units, and therefore may be useful in situations in which it is knows that loading will be particularly high. In such a way, an alternative efficient roller bearing is provided.

It is further preferred that the connection assembly comprises a slat track having a first set of an engagement surface or surfaces and corresponding first end roller unit, intermediate roller unit and second end bearing unit, and also having a second set of an engagement surface or surfaces, corresponding first end roller unit, intermediate roller unit and second end bearing unit. The second set may be a mirror of the first set. Both the first and second set of roller/bearing units may be connected to the main wing.

According to a preferred embodiment, the engagement surface, when viewed along the track longitudinal axis, comprises several surface sections with different curvature radii. Preferably, the different curvature radii of the surface sections are formed to achieve that in the retracted position and in the first extended position, the slat rests against the main wing, whereas in the second extended position, a gap is formed between the trailing edge of the slat and the leading edge of the main wing. It should be noted that the curvature radius on the inner flange might be different than the curvature radius on the outer flange, so that in case of internally oriented engagement surfaces facing towards each other it is referred to a center line between the engagement surfaces, i.e. a center line of the recess.

In particular, it is preferred that the engagement surface, when viewed along the track longitudinal axis, comprises four surface sections with four individual, preferably different, curvature radii. Specifically, a first surface section with a first curvature radius relates to the travel path of the first end roller unit between the retracted position, the first extended position, and the second extended position. A second surface section with a second curvature radius relates to the recessed portion that, in the retracted position, is aligned with the intermediate roller unit such that a contact force between the intermediate roller unit and the engagement surface of the slat track is eliminated or reduced. A third surface section with a third curvature radius relates to the travel path of the intermediate roller unit between the retracted position, the first extended position, and the second extended position. A fourth surface section with a fourth curvature radius relates to a section for overtravel and engagement with the second end bearing unit in the retracted position. By the four individual curvature radii of the four surface sections, it can be easily and efficiently achieved that in the retracted position and in the first extended position, the slat rests against the main wing, whereas in the second extended position, a gap is formed between the trailing edge of the slat and the leading edge of the main wing.

Alternatively, it is preferred that the engagement surface, when viewed along the track longitudinal axis, comprises six surface sections with six individual, preferably different, curvature radii. Specifically, a first surface section with a first curvature radius relates to the travel path of the first end roller unit between the retracted position and the first extended position. A second surface section with a second curvature radius relates to the travel path of the first end roller unit between the first extended position and the second extended position. A third surface section with a third curvature radius relates to the recessed portion that, in the retracted position, is aligned with the intermediate roller unit such that a contact force between the intermediate roller unit and the engagement surface of the slat track is eliminated or reduced. A fourth surface section with a fourth curvature radius relates to the travel path of the intermediate roller unit between the retracted position and the first extended position. A fifth surface section with a fifth curvature radius relates to the travel path of the intermediate roller unit between the first extended position and the second extended position. A sixth surface section with a sixth curvature radius relates to a section for overtravel and engagement with the second end bearing unit in the retracted position. By the six individual curvature radii of the six surface sections, it can be easily and efficiently achieved that in the retracted position and in the first extended position, the slat rests against the main wing, whereas in the second extended position, a gap is formed between the trailing edge of the slat and the leading edge of the main wing.

A further aspect of the invention relates to a leading edge high lift assembly for the wing according to any of the embodiments described in the preceding paragraphs. The leading edge high lift assembly comprises a slat and a connection assembly configured for movably connecting the slat to the main wing, such that the slat is movable between a retracted position, a first extended position, and a second extended position. The connection assembly comprises a slat track that extends along a track longitudinal axis between a first end and a second end and has an intermediate portion between the first and second ends. The first end and/or the intermediate portion of the slat track is configurable to be mounted to the slat. The slat track is configurable to be mounted to the main wing by a roller bearing such that the slat track is movable along the track longitudinal axis. The roller bearing comprises a plurality of bearing units, each of the bearing units being configurable to be mounted to the main wing and having a bearing surface configurable to engage an engagement surface provided on the slat track. The plurality of bearing units comprises at least a first end roller unit and an intermediate roller unit, wherein the plurality of bearing units are positioned such that, relative to the track longitudinal axis, the intermediate roller unit is positioned between the first end roller unit and the second end of the slat track. The slat track and/or the roller bearing are configurable such that in the retracted position and in the first extended position, the slat rests against the main wing, whereas in the second extended position, a gap is formed between the trailing edge of the slat and the leading edge of the main wing. The features and effects described before in connection with the wing apply vis-à-vis also to the leading edge high lift assembly.

Another aspect of the invention relates to an aircraft comprising a wing according to any of the embodiments described in the previous paragraphs, and/or comprising a leading edge high lift assembly according to any of the embodiments described in the previous paragraphs. The features and effects described before in connection with the wing and the leading edge high lift assembly apply vis-à-vis also to the aircraft.

It should be noted that, although in the above description the slat track has been described as being mounted to the main wing by a roller bearing, it may be possible to replace the roller bearing with a slide bearing. In this example, the first end roller unit, intermediate roller unit and second end bearing unit may each be represented by or comprise a slide bearing unit, such that sliding contact exists between the engagement surface and the slider bearing units, when contact therebetween is present.

Hereinafter, preferred embodiment of the present invention are explained in more detail by means of a drawings. The drawing shows in
- Fig. 1: a perspective view of an aircraft, showing a wing of the aircraft,
- Fig. 2: a perspective view of a connection assembly according to the prior art,
- Figs. 3A & 3B: side and cross-sectional views of an embodiment of the leading edge high lift assembly according to the invention, in a first configuration,
- Figs. 4A & 4B: side and cross-sectional views of the leading edge high lift assembly shown in Fig. 3, in a second configuration,
- Figs. 5A - 5C: schematic side views of an embodiment of the leading edge high lift assembly according to the invention, in a retracted position, a first extended position and a second extended position of the slat,
- Fig. 6 a: schematic side view of a further embodiment of the leading edge high lift assembly according to the invention, and
- Fig. 7: a schematic side view of a further embodiment of the leading edge high lift assembly according to the invention.

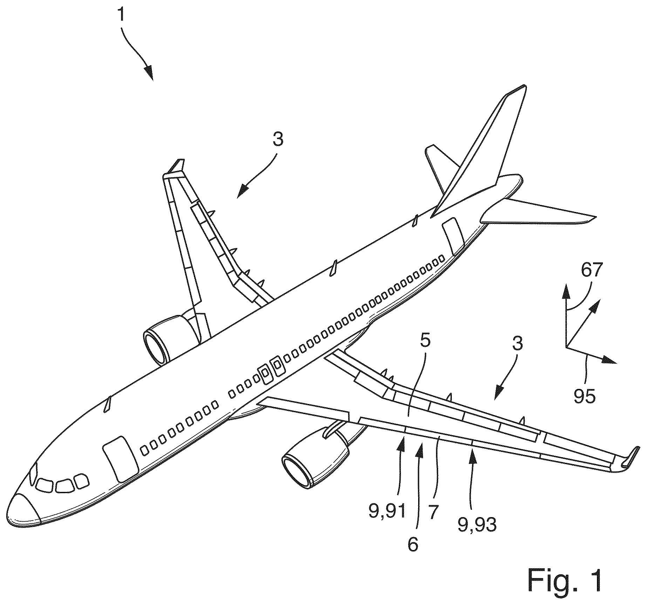

In Fig. 1 an aircraft 1 according to an embodiment of the present invention is illustrated. The aircraft 1 comprises a wing 3 that is formed according to an embodiment of the present invention. The wing comprises a main wing 5 and a leading edge high lift assembly 6 including a slat 7 and a connection assembly 9 connecting the slat 7 to the main wing 5 such that the slat 7 is movable relative to the main wing 5.

As shown in Fig. 1, the connection assembly 9 relates to a first connection assembly 91, and the wing 3 comprises a second connection assembly 93 connecting the slat 7 to the main wing 5 in a position spaced apart from the first connection assembly 91 in a wing span direction 95, and wherein the second connection assembly 93 is formed as the first connection assembly 91. Additionally illustrated in Fig. 1 is a wing thickness direction 67.

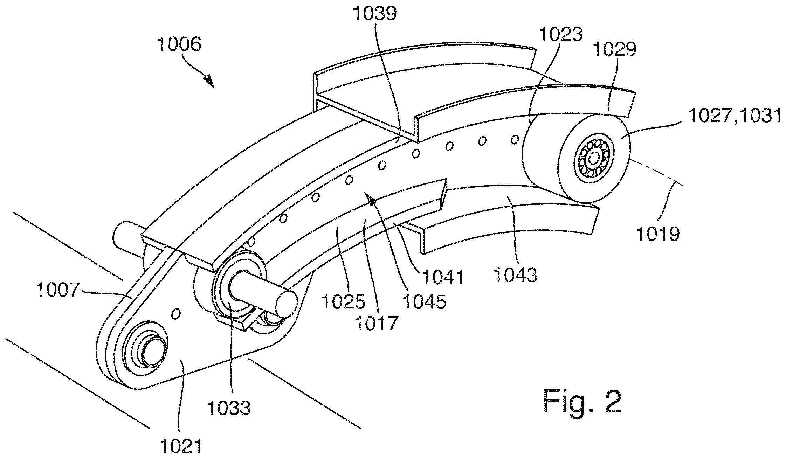

Fig. 2 shows a connection assembly 1006 of a wing for an aircraft according to the prior art, which is configured to connect a slat to the main wing of an aircraft. The connection assembly 1006 may be used in combination with a wing similar to that as described in Fig. 1, where the wing 3 comprises a main wing 5, a slat 7, and a connection assembly 9 (according to the present disclosure) movably connecting the slat 7 to the main wing 5, such that the slat 7 is movable between a retracted position 11 and at least one extended position 13, 15.

According to the prior art, the connection assembly 1006 comprises a slat track 1017 that extends along a track longitudinal axis 1019 between a front end 1021 and a rear end 1023 and has an intermediate portion 1025 between the front and rear ends 1021, 1023. The front end 1021 of the slat track 1017 is fixedly mounted to the slat 1007. The rear end 1023 and the intermediate portion 1025 of the slat track 1017 are movably mounted to the main wing 5 by a roller bearing 1027 such that the slat track 1017 is movable along the track longitudinal axis 1019. The roller bearing 1027 comprises a guide rail 1029 fixedly mounted to the main wing 5 and a first roller unit 1031 fixedly mounted to the rear end 1023 of the slat track 1017 and engaging the guide rail 1029. The roller bearing 1027 comprises a second roller unit 1033 that is fixedly mounted to the main wing 5 and that engages an engagement surface 1035 provided at the intermediate portion 1025 of the slat track 1017. The slat track 1017 has a profile comprising an upper flange portion 1039, a lower flange portion 1041 and at least one web portion 1043 connecting upper and lower flange portions 1039, 1041. The second roller unit 1033 is arranged in a recess 1045 between upper and lower flange portions 1039, 1041 and engages the engagement surface 1035 provided at the upper flange portion 1039 and at the lower flange portion 1041.

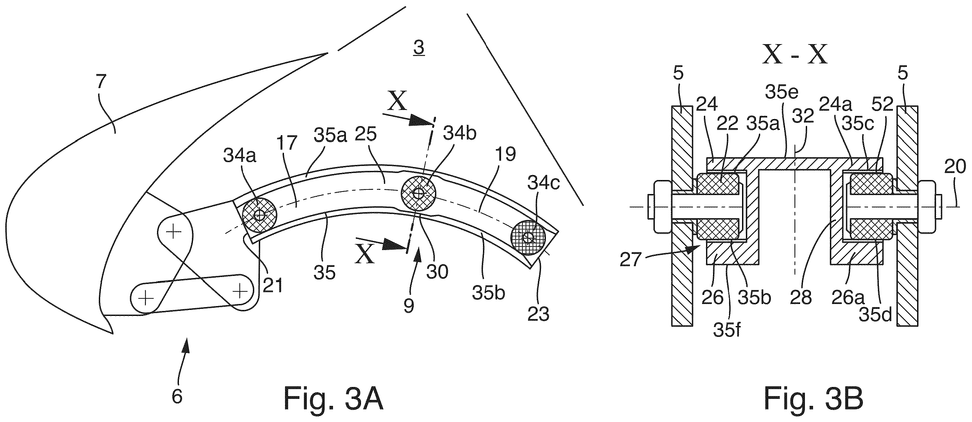

Figure 3A schematically illustrates a main wing 5 of an aircraft 1 comprising a leading edge high lift assembly 6 in the retracted configuration, while Figure 3B shows cross sectional view X-X of Figure 3A. As illustrated the leading edge high lift assembly 6 comprising a slat 7 and a connection assembly 9 which movably connects the slat 7 to the main wing 5.

The connection assembly 9 comprises a slat track 17 that extends along a track longitudinal axis 19 between a first end 21 and a second end 23, and has an intermediate portion 25 located therebetween. The slat 7 is, in this example, mounted to the first end 21 of the slat track 17, although may additionally or alternatively be mounted to the intermediate portion 25 thereof.

Illustrated best in Figure 3B, the slat track 17 is also mounted to the main wing 5 by a roller bearing 27. The roller bearing 27 permits the track 17 to be moveable along the track longitudinal axis 19 relative to the main wing 5, and therefore also enables movement of the slat 7 relative to the main wing 5. As illustrated in Figure 3A, the roller bearing 27 comprises a plurality of bearing units, in this example three bearing units 34a-c. Each of the bearing units 34a-c is mounted to the main wing 5 and may be mounted by any means possible. In this example, the bearing units 34a-c each comprise a roller bearing and therefore may be bolted to the main wing 5 so as to enable rotation relative thereto, in this example about a roller axis 20 extending in the axial direction of the roller bearing. Here, each of the bearing units comprise a bearing surface 22 for engaging an engagement surface 35 of the slat track 17.

Illustrated in Figure 3B, the track 17 comprises a first flange 24, in particular an upper flange portion, and a second flange 26, in particular a lower flange portion, connected by a web portion 28. The first and second flange 24, 26 and the web 28 are oriented in a C-shape to define a recess 41 in which the roller/bearing units are at least partially or wholly located. The slat track 17 therefore comprises a first and a second internally oriented engagement surface 35a, 35b, which face each other, and also extend parallel to one another and optionally parallel to the track longitudinal axis 19. In order to avoid jamming of the bearing units 34a-c, in some examples (such as the example of Figures 3A and 3B where the bearing units are in the form of roller bearings) the bearing units 34a-c may be dimensioned such that contact is only possible between one of the engagement surfaces 35a, 35b at any one time.

The bearing units 34a-c of this example are a first end roller unit 34a, an intermediate roller unit 34b and a second end bearing unit 34c in the form of a roller unit. Here the intermediate roller unit 34b is positioned between the first end roller unit 34a and the second end bearing unit 34c relative to the track longitudinal axis 19 (e.g. positioned in the intermediate portion 25). The first end roller unit 34a is, in the retracted position, positioned at (e.g. adjacent) the first end 21 of the slat track 17 while the second end bearing unit 34c is positioned at the second end 23 of the slat track 17.

In this example, in the retracted position, load is transferred between the slat track 17 and the main wing 5 via the first end roller unit 34a and the second end bearing unit 34c. All the load, or substantially all the load, may be transferred between the main wing 5 and the slat track 17 via the first end roller unit 34a and the second end bearing unit 34c in the retracted position, or the principal load (e.g. the majority of the load) may be transferred via the first end roller unit 34a and the second end bearing unit 34c.

The slat track 17 additionally comprises a recessed portion 30. The recessed portion 30 is present in both the first and second flanges 24, 26 of the slat track 17. The recessed portion 30 extends into the track, and extends in the direction away from the roller axis 20 of the intermediate roller unit 34b. Since the recessed portion 30 extends away from the roller axis 20 of the intermediate roller 34b, it may cause a reduction or elimination in the contact force between the intermediate roller 34b and the engagement surface 35, and in some examples (such as this example) may permit disengagement of the intermediate roller 34b with the engagement surface 35 (e.g. with both engagement surfaces 35a, 35b) such that a clearance gap 52 exists therebetween. Thus, the loads between the main wing 5 and the slat track 7 may be transferred through the first end roller unit 34a and the second end bearing unit 34c (in this example, roller units). As such, only two roller units in contact with the engagement surface 35a and/or 35b may transfer force between the main wing 5 and the slat track 17, thereby avoiding additional forces as a result of the connection assembly 9 being overconstrained in the retracted position.

In this example the recessed portion 30 comprises a graduated transition to the engagement surface 35 on which it is located, which is illustrated in this way in the form of a ramp. The recessed portion 30 may form part of the engagement surface 35 (meaning that it may be possible for the intermediate roller unit 34b to come into contact with part thereof). Additionally or alternatively, the recessed portion 30 may represent a discontinuity in the engagement surface 35 and divide the engagement surface 35 into a first engagement surface extending in a first direction parallel to the track longitudinal axis 19, and a second engagement surface extending in a second direction parallel to the track longitudinal axis 19.

As clearly illustrated in Figure 3B, the connection assembly 9 and roller bearing 27 shown in Figure 3A are mirrored about the plane 32 extending parallel to the track longitudinal axis 19 and perpendicular to the roller axis 20. As such, the connection assembly 9 comprises a second set of flanges 24a, 26a comprising a second set of engagement surfaces 35c, 35d and a second bearing 27a comprising a second set of bearing units 34d-f. For the sake of conciseness, a description of the mirrored connection assembly will not be provided, although the skilled reader will appreciate that it is as described above in relation to the connection assembly 9.

Illustrated herein, the cross-section of the connection assembly 9, and the slat track 17 of the connection assembly has a substantially pi (π) shape formed by the first C-shaped connected flanges 24, 26 and web portion 28, and equivalent mirrored C-shaped flanges 24a, 26a and web portion being separated by an intermediate space therebetween. However, it should also be noted that no intermediate space may be present. In this case, the cross-sectional shape may be an I-shape, or a double T-shape, while still comprising both the first and mirrored C-shaped flanges 22, 24, 22a, 24a and web portion 28. In this case, the web portion 28 may be shared between the sets of flanges 22, 24, 22a, 24a.

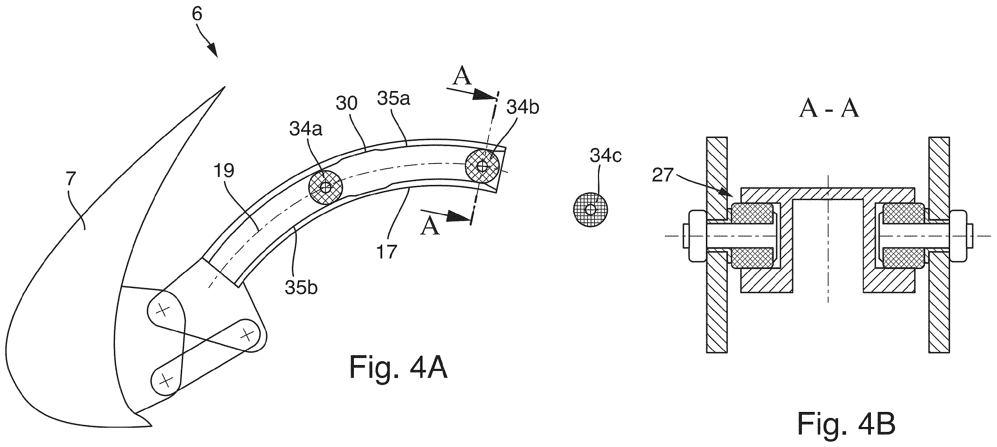

Figure 4A illustrates the slat 7 of Figure 3A in an extended position. Figure 4B illustrates cross section A-A of Figure 4B. Here, the slat track 17 has moved relative to the roller bearing 27. In the extended position, neither of the engagement surfaces 35a, 35b are in contact with the second end bearing unit 34c. Further, the recessed portion 30 is no longer aligned along the track longitudinal axis 19 with the intermediate roller unit 34b (see also in Figure 4B, there is no gap illustrated between the intermediate bearing 33b on one side thereof, whereas on another side thereof a gap is present to prevent the intermediate bearing 34b from becoming wedged in the track 17), such that the intermediate roller unit 34 is in contact with one of the engagement surfaces 35a, 35b, as is the first end roller unit 34a. As such, in the illustrated extended position, the first end roller unit 34a and the intermediate roller unit 34b transfer forces between the main wing 5 and the slat track 17 (e.g. all the forces are transferred by the first end and intermediate roller units 34a, 34b, or the principal force is transferred by the first end and intermediate roller units 34a, 34b). Again, only two roller/bearing units are in contact with the engagement surface 35a and/or 35b, while the third is disengaged with the slat track 17. This avoids additional forces as a result of the connection assembly 9 being over constrained.

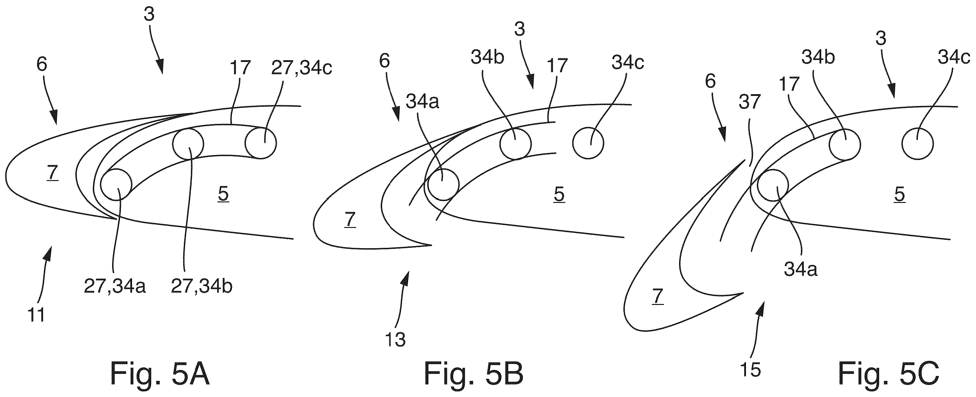

Figs. 5A to 5C illustrate an embodiment of the leading edge high lift assembly 6, which might be the embodiment shown in Figs. 3 and 4. As illustrated, the slat track 17 and the roller bearing 27 are configured such that in the retracted position 11 and in the first extended position 13, the slat 7 rests against the main wing 5, in particular a trailing edge of the slat 7 rests against a leading edge of the main wing 5, so that fluid cannot pass between the slat 7 and the main wing 5, whereas in the second extended position 15, a gap 37 is formed between the trailing edge of the slat 7 and the leading edge of the main wing 5 for fluid to pass through.

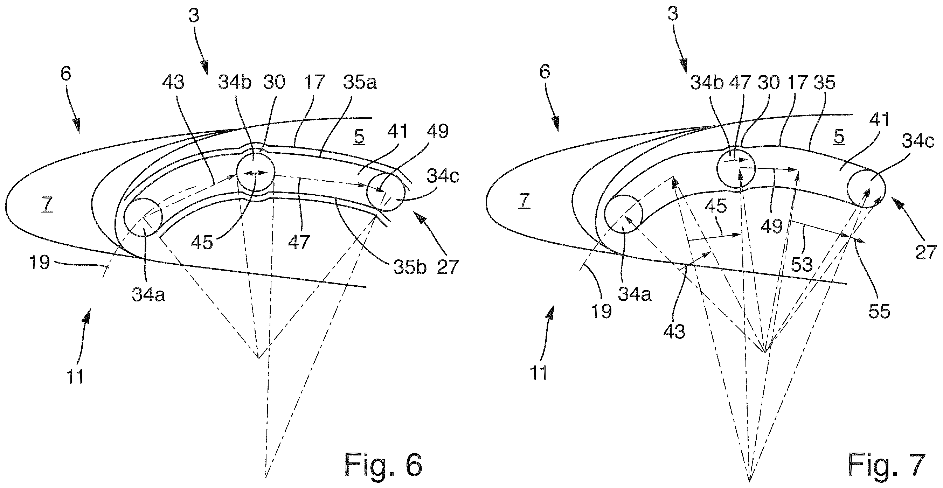

Figs. 6 and 7 illustrate further embodiments of the leading edge high lift assembly 6 according to the invention, wherein the engagement surface 35, when viewed along the track longitudinal axis 19, comprises several surface sections with different curvature radii. The different curvature radii of the surface sections are formed to achieve that in the retracted position 11 and in the first extended position 13, the slat 7 rests against the main wing 5, whereas in the second extended position 15, a gap 37 is formed between the trailing edge of the slat 7 and the leading edge of the main wing 5. It should be noted that the curvature radius on the inner flange might be different than the curvature radius on the outer flange, so that in case of internally oriented engagement surfaces 35a, 35b facing towards each other it is referred to a center line between the engagement surfaces 35a, 35b, i.e. a center line of the recess 41.

As shown in Fig. 6, the engagement surface 35, when viewed along the track longitudinal axis 19, comprises four surface sections 43, 45, 47, 49 with four individual curvature radii. Specifically, a first surface section 43 with a first curvature radius relates to the travel path of the first end roller unit 34a between the retracted position 11, the first extended position 13, and the second extended position 15. A second surface section 45 with a second curvature radius relates to the recessed portion 30 that, in the retracted position 11, is aligned with the intermediate roller unit 34b such that a contact force between the intermediate roller unit 34b and the engagement surface 35 of the slat track 17 is eliminated or reduced. A third surface section 47 with a third curvature radius relates to the travel path of the intermediate roller unit between the retracted position 11, the first extended position 13, and the second extended position 15. A fourth surface section 49 with a fourth curvature radius relates to a section for overtravel and engagement with the second end bearing unit 34c in the retracted position 11.

As shown in Fig. 7, the engagement surface 35, when viewed along the track longitudinal axis 19, comprises six surface sections 43, 45, 47, 49, 53, 55 with six individual curvature radii. Specifically, a first surface section 43 with a first curvature radius relates to the travel path of the first end roller unit 34a between the retracted position 11 and the first extended position 13. A second surface section 45 with a second curvature radius relates to the travel path of the first end roller unit 34a between the first extended position 13 and the second extended position 15. A third surface section 47 with a third curvature radius relates to the recessed portion 30 that, in the retracted position 11, is aligned with the intermediate roller unit 34b such that a contact force between the intermediate roller unit 34b and the engagement surface 35 of the slat track 17 is eliminated or reduced. A fourth surface section 49 with a fourth curvature radius relates to the travel path of the intermediate roller unit 34b between the retracted position 11 and the first extended position 13. A fifth surface section 53 with a fifth curvature radius relates to the travel path of the intermediate roller unit 34b between the first extended position 13 and the second extended position 15. A sixth surface section 55 with a sixth curvature radius relates to a section for overtravel and engagement with the second end bearing unit 34c in the retracted position 11.

By the wing 3 and the leading edge high lift assembly 6 according to the invention and as described before, the benefits of a sealed slat and the benefits of a slat configuration with gap 37 are combined. In particular, for take-off when the aircraft 1 accelerates, little drag is desired as well as little noise, so a closed gap in the first extended position 13 is beneficial. For approach and landing, in turn, when the aircraft 1 requires high lift in order to achieve minimum speed, a gap 37 is beneficial in the fully extended position of the slat 7. In such a way, an ideal ratio of aerodynamic performance and noise generated by extension of the slat 7 is obtained.

## Claims

1. A wing (3) for an aircraft (1), comprising
a main wing (5) and
a leading edge high lift assembly (6) comprising
a slat (7), and
a connection assembly (9) movably connecting the slat (7) to the main wing (5), such that the slat (7) is movable between a retracted position (11), a first extended position (13), and a second extended position (15),
wherein the connection assembly (9) comprises an elongate slat track (17) that extends along a track longitudinal axis (19) between a first end (21) and a second end (23) and has an intermediate portion (25) between the first and second ends (21, 23),
wherein the first end (21) and/or the intermediate portion (25) of the slat track (17) is mounted to the slat (7),
wherein the slat track (17) is mounted to the main wing (5) by a roller bearing (27) such that the slat track (17) is movable along the track longitudinal axis (19),
wherein the roller bearing (27) comprises a plurality of bearing units (34a-c), each of the bearing units (34a-c) being mounted to the main wing (5) and having a bearing surface (22) for engaging an engagement surface (35) provided on the slat track (17),
wherein the plurality of bearing units (34a-c) comprises at least a first end roller unit (34a) and an intermediate roller unit (34b), wherein the plurality of bearing units (34a-c) are positioned such that, relative to the track longitudinal axis (19), the intermediate roller unit (34b) is positioned between the first end roller unit (34a) and the second end (23) of the slat track (17),
**characterised in that**
the slat track (17) and the roller bearing (27) are configured such that in the retracted position (11) and in the first extended position (13), the slat (7) rests against the main wing (5), whereas in the second extended position (15), a gap (37) is formed between the trailing edge of the slat (7) and the leading edge of the main wing (5).

2. The wing (3) according to claim 1, wherein the plurality of bearing units (34a-c) further comprises a second end bearing unit (34c), wherein the plurality of bearing units (34a-c) are positioned such that, relative to the track longitudinal axis (19), the intermediate roller unit (34b) is positioned between the first end roller unit (34a) and the second end bearing unit (34c).

3. The wing (3) according to claim 2, wherein the slat track (17) and the roller bearing (27) are configured such that in the retracted position (11) main loads are transferred between the slat track (17) and the roller bearing (27) via the first end roller unit (34a) and the second end bearing unit (34c), whereas in the first and second extended positions (13,15) main loads are transferred between the slat track (17) and the roller bearing (27) via the first end roller unit (34a) and the intermediate roller unit (34b).

4. The wing (3) according to claim 2 or 3, wherein in the retracted position (11), the intermediate roller unit (34b) is configured to disengage with the engagement surface (35) such that a clearance gap (52) exists between the intermediate roller unit (34b) and the engagement surface (35), and the first end roller unit (34a) and the second end bearing unit (34c) are configured to engage the engagement surface (35); and
wherein in the first and second extended positions (13, 15), the second end bearing unit (34c) is configured to disengage with the engagement surface (35) and the intermediate roller unit (34b) and the first end roller unit (34a) are configured to engage with the engagement surface (35).

5. The wing (3) according to any of claims 2 to 4, wherein the engagement surface (35) is configured to be simultaneously engaged by the first end roller unit (34a) and either the intermediate roller unit (34) or the second end bearing unit (34c).

6. The wing (3) according to any of claims 2 to 5, wherein the slat track (17, 217) comprises a recessed portion (30) wherein, in the retracted position (11), the recessed portion (30) is configured to align along the track longitudinal axis (19, 219) with the intermediate roller unit (34b) such that a contact force between the intermediate roller unit (34b) and the engagement surface (35) of the slat track (17, 217) is eliminated or reduced.

7. The wing (3) according to claim 6, wherein the recessed portion (30) defines a discontinuity in the engagement surface (35) dividing the engagement surface (35) into a first engagement surface (35a) extending in a first direction parallel to the track longitudinal axis (19), and a second engagement surface (35b) extending in a second direction parallel to the track longitudinal axis (19), wherein the first end roller unit (34a) is configured to engage the first engagement surface (35a), and the intermediate roller unit (34b) and the second end bearing unit (34c) are configured to engage the second engagement surface (35b).

8. The wing (3) according to claim 6 or 7, wherein the recessed portion (30) comprises a graduated transition to the engagement surface (35) in the form of a ramp.

9. The wing (3) according to any of claims 2 to 8, wherein the second end bearing unit (34c) comprises a roller unit.

10. The wing (3) according to any of claims 1 to 9, wherein the slat track (17) comprises a first and second internally oriented engagement surface (35a, 35b) and/or a first and second externally oriented engagement surface (35e, 35f), the first internally oriented engagement surface (35a) facing the second internally oriented engagement surface (35b), and the first externally oriented engagement surface (35e) facing away from the second externally oriented engagement surface (35f), and wherein each of the first end roller unit (34a), the intermediate roller unit (34b) and the second end bearing unit (34c) is configured to engage at least one of the first and second internally oriented engagement surface (35a, 35b) and the first and second externally oriented engagement surface (35e, 35f).

11. The wing (3) according to any of claims 1 to 10, wherein the engagement surface (35), when viewed along the track longitudinal axis (19), comprises several surface sections with different curvature radii.

12. The wing according to claim 11, wherein the engagement surface (35), when viewed along the track longitudinal axis, comprises four surface sections (43, 45, 47, 49) with four individual curvature radii,
wherein a first surface section (43) with a first curvature radius relates to the travel path of the first end roller unit (34a) between the retracted position (11), the first extended position (13), and the second extended position (15),
wherein a second surface section (45) with a second curvature radius relates to the recessed portion (30) that, in the retracted position (11), is aligned with the intermediate roller unit (34b) such that a contact force between the intermediate roller unit (34b) and the engagement surface (35) of the slat track (17, 217) is eliminated or reduced,
wherein a third surface section (47) with a third curvature radius relates to the travel path of the intermediate roller unit (34b) between the retracted position (11), the first extended position (13), and the second extended position (15), and
wherein a fourth surface section (49) with a fourth curvature radius relates to a section for engagement with the second end bearing unit (34c) in the retracted position (11).

13. The wing according to claim 11, wherein the engagement surface (35), when viewed along the track longitudinal axis, comprises six surface sections (43, 45, 47, 49, 53, 55) with six individual curvature radii,
wherein a first surface section (43) with a first curvature radius relates to the travel path of the first end roller unit (34a) between the retracted position (11) and the first extended position (13),
wherein a second surface section (45) with a second curvature radius relates to the travel path of the first end roller unit (34a) between the first extended position (13) and the second extended position (15),
wherein a third surface section (47) with a third curvature radius relates to the recessed portion (30) that, in the retracted position (11), is aligned with the intermediate roller unit (34b) such that a contact force between the intermediate roller unit (34b) and the engagement surface (35) of the slat track (17) is eliminated or reduced,
wherein a fourth surface section (49) with a fourth curvature radius relates to the travel path of the intermediate roller unit (34b) between the retracted position (11) and the first extended position (13),
wherein a fifth surface section (53) with a fifth curvature radius relates to the travel path of the intermediate roller unit (34b) between the first extended position (13) and the second extended position (15), and
wherein a sixth surface section (55) with a sixth curvature radius relates to a section for engagement with the second end bearing unit (34c) in the retracted position (11).

14. A leading edge high lift assembly (6) for the wing (3) according to any of claims 1 to 13, the leading edge high lift assembly 6) comprising
a slat (7), and
a connection assembly (9) configured for movably connecting the slat (7) to the main wing (5), such that the slat (7) is movable between a retracted position (11), a first extended position, and a second extended position (13, 15),
wherein the connection assembly (9) comprises a slat track (17) that extends along a track longitudinal axis (19) between a first end (21) and a second end (23) and has an intermediate portion (25) between the first and second ends (21, 23),
wherein the first end (21) and/or the intermediate portion of the slat track (17) is configurable to be mounted to the slat (7),
wherein the slat track (17) is configurable to be mounted to the main wing (5) by a roller bearing (27) such that the slat track (17) is movable along the track longitudinal axis (19),
wherein the roller bearing (27) comprises a plurality of bearing units (34a-c), each of the bearing units (34a-c) being configurable to be mounted to the main wing (5) and having a bearing surface (22) configurable to engage an engagement surface (35) provided on the slat track (17), and
wherein the plurality of bearing units (34a-c) comprises at least a first end roller unit (34a) and an intermediate roller unit (34b), wherein the plurality of bearing units (34a-c) are positioned such that, relative to the track longitudinal axis (19), the intermediate roller unit (34b) is positioned between the first end roller unit (34a) and the second end (23) of the slat track (17),
**characterized in that**
the slat track (17) and/or the roller bearing (27) are configurable such that in the retracted position (11) and in the first extended position (13), the slat (7) rests against the main wing (5), whereas in the second extended position (15), a gap (37) is formed between the trailing edge of the slat (7) and the leading edge of the main wing (5).

15. An aircraft (1) comprising a wing (3) according to any of claims 1 to 13, and/or comprising a leading edge high lift assembly (6) according to claim 14.
